# EUROPÄISCHE PATENTANMELDUNG

(11) **EP 4 847 963 A2**
(43) Veröffentlichungstag der Anmeldung: **02.12.2026**
(21) Anmeldenummer: 26177264.4
(22) Anmeldetag: 07.05.2026
(51) Int. Cl.: G01S 13/931, B60R 11/04, G01S 7/02, G01S 7/481, G01S 13/86, G01S 17/931, B60R 11/00, G01S 15/931, G01S 17/86

(54) **MODULARE SENSORPLATTFORM AUF DEM DACH VON FAHRZEUGEN ZUR UNTERSTÜTZUNG DES TEIL- ODER VOLLAUTONOMEN FAHRENS**

(30) Priorität: 07.05.2025 EP 25174894
(71) Anmelder: Elda Grenefé Entwicklungsgesellschaft mbH, 22607 Hamburg (DE)
(72) Erfinder: Rödiger, Andreas, 22607 Hamburg (DE)
(74) Vertreter: Hertin und Partner Rechts- und Patentanwälte PartG mbB

(57) **Zusammenfassung**

Die Erfindung betrifft das Gebiet der Sensorik für autonomes oder assistiertes Fahren, insbesondere die Anordnung, Integration und Nutzung von Sensoren auf dem Dach von Wohnmobilen, Wohnwagen, Caravans oder anderen Fahrzeugen. In einem Aspekt betrifft die betrifft eine Sensorplattform zur Integration auf dem Dach eines Fahrzeugs, umfassend mindestens einen Lidar-Sensor, mindestens zwei optische Kameras, mindestens einen Radar-Sensor und eine Datenverbindungseinheit. In Ausführungsformen sind die Sensoren in einem aerodynamisch geformten Gehäuse untergebracht. Die Plattform kann ferner eine Energieversorgungseinheit, die optional mit einer Solaranlage gekoppelt ist, eine Vorrichtung zur automatisierten Reinigung sowie teleskopierbare Sensoren oder Halterungen umfassen. In einem weiteren Aspekt betrifft die Erfindung eine Sensorträgerarchitektur für ein Fahrzeug, bei der ein Sensorträger für eine kraft- und/oder formschlüssige Integration in eine primäre tragende Strukturkomponente des Fahrzeugs ausgebildet ist. Die Erfindung umfasst zudem ein Fahrzeug mit einer solchen Architektur.

## Beschreibung

Die Erfindung betrifft das Gebiet der Sensorik für autonomes oder assistiertes Fahren, insbesondere die Anordnung, Integration und Nutzung von Sensoren auf dem Dach von Fahrzeugen.

In einem Aspekt betrifft die Erfindung eine Sensorplattform zur Integration auf dem Dach eines Fahrzeugs, umfassend mindestens einen Lidar-Sensor, mindestens zwei optische Kameras, mindestens einen Radar-Sensor und eine Datenverbindungseinheit. In Ausführungsformen sind die Sensoren in einem aerodynamisch geformten Gehäuse untergebracht. Die Plattform kann ferner eine Energieversorgungseinheit, die optional mit einer Solaranlage gekoppelt ist, eine Vorrichtung zur automatisierten Reinigung sowie teleskopierbare Sensoren oder Halterungen umfassen.

In einem weiteren Aspekt betrifft die Erfindung eine Sensorträgerarchitektur (8) für ein Fahrzeug, bei der ein Sensorträger für eine kraft- und/oder formschlüssige Integration in eine primäre tragende Strukturkomponente des Fahrzeugs ausgebildet ist. Die Erfindung umfasst zudem ein Fahrzeug (15) mit einer solchen Architektur.

### HINTERGRUND UND STAND DER TECHNIK

Im Stand der Technik sind autonome und teilautonome Fahrsysteme bekannt, die in Personenkraftwagen (PKWs) und Nutzfahrzeugen zum Einsatz kommen. Diese Systeme nutzen eine Vielzahl von Sensoren wie Kameras, Lidar-, Radar- und Ultraschallsensoren, um die Fahrzeugumgebung zu erfassen und eine automatisierte Steuerung des Fahrzeugs zu ermöglichen.

Diese bekannten Systeme sind jedoch in der Regel auf die spezifischen Gegebenheiten herkömmlicher Fahrzeuge zugeschnitten und berücksichtigen nicht die besonderen Anforderungen von Fahrzeugen wie beispielsweise Wohnmobilen, Wohnwagen oder Caravans. Solche Fahrzeuge weisen oft abweichende bauliche Gegebenheiten, wie größere Abmessungen und anders gestaltete Dachaufbauten mit Luken oder Solaranlagen, sowie besondere Nutzungsprofile, beispielsweise als Teil einer Zugfahrzeug-Anhängerkombination, auf. Eine einfache Übertragung der für PKWs entwickelten Sensorsysteme auf andere Fahrzeuge ist daher nicht ohne weiteres möglich.

Ein grundlegendes und ungelöstes Problem im Stand der Technik betrifft die Art und Weise, wie Sensoren und Sensorträger am Fahrzeug befestigt werden. Bekannte Sensorplattformen sind typischerweise als aufgesetzte Baugruppen oder in Karosserieteile integrierte Module ausgeführt. Ein kritischer Mangel dieser Lösungen ist, dass die Sensoren fast ausnahmslos an nicht-tragenden oder sekundären Strukturkomponenten montiert werden. Hierzu zählen insbesondere Stoßfänger, Kotflügel, Kühlergrills und andere äußere Kunststoff- oder Blechverkleidungen. Diese Montagestrategie führt zu mehreren gravierenden technischen Nachteilen, die die Zuverlässigkeit und Sicherheit autonomer Systeme fundamental beeinträchtigen.

Die Position und Ausrichtung solcher Sensorträger relativ zur tragenden Struktur ist instabil und kann sich unvorhersehbar verändern. Eine wesentliche Ursache hierfür ist die thermische Instabilität, da insbesondere Kunststoffkomponenten auf Temperaturschwankungen mit Materialverformungen reagieren, was eine signifikante Dejustierung der Sensorik bewirkt. Hinzu kommt die mechanische Instabilität, denn diese Anbauteile sind anfällig für Vibrationen während der Fahrt und Verformungen durch aerodynamische Lasten, was über den Lebenszyklus durch Materialermüdung zu einer schleichenden, aber permanenten Veränderung der Sensorposition führt. Besonders schwerwiegend ist jedoch die fehlende Reproduzierbarkeit nach Reparaturen. Nach einem selbst geringfügigen Unfall, der den Austausch eines Stoßfängers erfordert, ist eine wiederholgenaue Positionierung des neuen Bauteils und der darin enthaltenen Sensoren praktisch unmöglich. Dies erzwingt eine aufwändige und kostenintensive Neukalibrierung des Gesamtsystems, die in der Werkstattpraxis oft fehlerhaft oder gar nicht durchgeführt wird und somit ein erhebliches Sicherheitsrisiko darstellt.

Infolge dieser Mängel fehlt im Stand der Technik eine dauerhaft definierte und über den gesamten Lebenszyklus des Fahrzeugs reproduzierbare geometrische Referenz zwischen der Sensorik und der tragenden Fahrzeugstruktur. Diese fehlende geometrische Referenz führt dazu, dass Sensordaten nach einem Bauteilaustausch oder einer strukturellen Instandsetzung nicht mehr eindeutig auf ein ursprüngliches, fahrzeugfestes Koordinatensystem zurückgeführt werden können. Dies stellt ein erhebliches Hindernis für Anwendungen dar, bei denen eine dauerhaft reproduzierbare Zuordnung der Sensordaten erforderlich ist, wie beispielsweise für eine über lange Zeiträume verlässliche und gerichtsverwertbare Ereignisdokumentation oder für Langzeit-Lernprozesse wie SLAM (Simultaneous Localization and Mapping), bei denen eine instabile Sensorposition die erstellten Umgebungskarten korrumpiert.

Eine technische Lösung, welche die inhärenten Nachteile dieser nicht-referenzierten Sensoranordnungen überwindet, ist aus dem Stand der Technik nicht bekannt.

### ZUSAMMENFASSUNG DER ERFINDUNG

Ausgehend von den Nachteilen und den ungelösten Problemen des Standes der Technik ist es die Aufgabe der vorliegenden Erfindung, eine modulare und aerodynamisch integrierbare Sensorplattform bereitzustellen, die auf dem Dach von Fahrzeugen montierbar ist und die für autonomes oder teilautonomes Fahren notwendigen Daten liefert.

Insbesondere soll eine dauerhaft stabile und geometrisch eindeutig definierte Referenz zwischen der Sensorik und der tragenden Fahrzeugstruktur geschaffen werden. Dadurch soll ermöglicht werden, dass Sensordaten auch über lange Zeiträume und nach Reparaturen oder dem Austausch von Bauteilen reproduzierbar auf ein fahrzeugfestes Strukturkoordinatensystem zurückgeführt werden können, was eine Grundlage für verlässliche und gerichtsverwertbare Ereignisdokumentationen schafft.

Eine weitere Aufgabe war es, eine Sensorplattform bereitzustellen, die speziell auf die besonderen baulichen Gegebenheiten und Anforderungen einer Vielzahl von Fahrzeugen zugeschnitten ist.

Eine weitere Aufgabe war es, die Betriebssicherheit und Langlebigkeit der empfindlichen Sensorkomponenten zu gewährleisten, indem ein effektiver Schutz vor Witterungseinflüssen wie Regen, Schmutz und mechanischer Belastung bereitgestellt wird.

Es war zudem eine Aufgabe, die durchgehende Funktionsfähigkeit der Sensorik auch bei widrigen Umgebungsbedingungen sicherzustellen, indem eine Möglichkeit zur automatisierten Reinigung der Sensorabdeckungen geschaffen wird, um die Verfügbarkeit des autonomen Systems zu erhöhen.

Eine Aufgabe der Erfindung war es, eine Lösung zu schaffen, die nicht nur für Neufahrzeuge geeignet ist, sondern auch eine einfache und kosteneffiziente Nachrüstung bestehender Fahrzeuge ermöglicht.

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

Die Erfindung betrifft eine Sensorträgerarchitektur für Fahrzeuge, welche eine dauerhaft stabile und geometrisch exakte Anbindung von Sensorik an eine tragende Fahrzeugstruktur ermöglicht. In einer spezifischen Ausführungsform betrifft die Erfindung zudem eine
modulare Sensorplattform, die eine solche Architektur nutzt und auf dem Dach eines Fahrzeugs integriert wird.

In einem Aspekt betrifft die Erfindung eine Sensorplattform zur Integration auf dem Dach eines Fahrzeugs zur Unterstützung des teil- oder vollautonomen Fahrens, umfassend: a) mindestens einen Lidar-Sensor, b) mindestens zwei optische Kameras, c) mindestens einen Radar-Sensor, und d) eine Datenverbindungseinheit zur Verbindung mit einer Verarbeitungseinheit im Fahrzeug.

In einem Aspekt betrifft die Erfindung eine Sensorplattform zur Integration auf dem Dach eines Fahrzeugs zur Unterstützung des teil- oder vollautonomen Fahrens, umfassend: a) mindestens einen Lidar-Sensor, b) mindestens zwei optische Kameras, c) mindestens einen Radar-Sensor, und d) eine Datenverbindungseinheit zur Verbindung mit einer Verarbeitungseinheit im Fahrzeug, wobei die Sensoren in mindestens einer auf dem Dach des Fahrzeugs montierbaren Einheit angeordnet sind.

In einem Aspekt betrifft die Erfindung eine Sensorplattform zur Integration auf dem Dach eines Fahrzeugs zur Unterstützung des teil- oder vollautonomen Fahrens, umfassend: a) mindestens einen Lidar-Sensor, b) mindestens zwei optische Kameras, c) mindestens einen Radar-Sensor, und d) eine Datenverbindungseinheit zur Verbindung mit einer Verarbeitungseinheit im Fahrzeug, wobei die Sensoren in mindestens einer auf dem Dach des Fahrzeugs montierbaren Einheit angeordnet sind.

Diese Anordnung bietet den Vorteil, dass die Sensorik von einer erhöhten Position aus eine Art Vogelperspektive auf die Fahrzeugumgebung erhält. Dies ist insbesondere bei großen Fahrzeugen von Vorteil, da hierdurch der tote Winkel reduziert und eine vorausschauende Erfassung des Verkehrsgeschehens ermöglicht wird. Die spezifische Kombination aus Lidar-Sensoren für eine präzise 3D-Distanzerfassung, optischen Kameras zur Objekterkennung (beispielsweise von Verkehrszeichen oder Fahrspurmarkierungen) und Radar-Sensoren für eine robuste Geschwindigkeits- und Entfernungsmessung auch bei schlechten Witterungsbedingungen, stellt eine zuverlässige Sensorkombination dar. Die Integration in einer montierbaren Einheit erleichtert zudem die Nachrüstung bestehender Fahrzeuge.

In einer weiteren vorteilhaften Ausgestaltung sind die Sensoren innerhalb der Einheit positioniert, um eine 360°-Rundumsicht zu gewährleisten. Beispielsweise kann der Lidar-Sensor zentral und an der höchsten Stelle der Einheit positioniert sein, während die Kameras an den Ecken der Einheit angebracht sind, um eine überlappende und lückenlose Abdeckung der Fahrzeugumgebung zu erzielen.

In Ausführungsformen kann die Datenverbindungseinheit kabelgebunden, vorzugsweise über einen Automotive Ethernet Bus, oder drahtlos, vorzugsweise über einen WLAN- oder 5G-Standard, realisiert sein. In Ausführungsformen ermöglicht die erfindungsgemäße Datenverbindungseinheit somit eine hohe Bandbreite und geringe Latenz bei der Übertragung der Sensordaten an die zentrale Verarbeitungseinheit im Fahrzeug.

In einer Ausführungsform ist die Datenverbindungseinheit für eine Datenübertragungsrate von mindestens 100 Mbit/s ausgelegt, vorzugsweise für mindestens 1 Gbit/s, und besonders vorzugsweise für mindestens 10 Gbit/s, um die Rohdaten mehrerer hochauflösender Sensoren in Echtzeit zu übertragen.

In Ausführungsformen kann die "mindestens eine montierbare Einheit" als ein einziges, zentrales Gehäuse oder als ein System aus mehreren, auf dem Dach verteilten Modulen ausgebildet sein. In Ausführungsformen ermöglicht Letzteres eine besonders flexible Anpassung an bereits vorhandene Dachaufbauten wie Solaranlagen oder Dachluken, was ein wesentlicher Vorteil bei der Nachrüstung von Fahrzeugen ist.

In einer Ausführungsform ist die Sensorplattform so auf dem Dach des Fahrzeugs montiert, dass sich der optische Mittelpunkt der höchstgelegenen Sensoreinheit in einer Höhe zwischen 1,5 m und 4,5 m über dem Boden befindet, vorzugsweise zwischen 2,5 m und 4,0 m.

In weiteren Ausführungsformen können die optischen Kamerasysteme als monokulare Kameras oder als stereoskopische Kamerasysteme (Stereo) ausgeführt sein. In Ausführungsformen ermöglichen stereoskopische Kamerasysteme eine verbesserte Tiefenwahrnehmung und 3D-Rekonstruktion der Umgebung.

In einer Ausführungsform werden die Radar-Sensoren in unterschiedlichen Frequenzbändern betrieben, vorzugsweise bei 77 GHz für die Fernbereichserfassung und vorzugsweise bei 24 GHz für die Überwachung des Nah- und Mittelbereichs.

In einer Ausführungsform arbeiten die Radar-Sensoren in einem Frequenzbereich von 20 GHz bis 81 GHz. In einer bevorzugten Ausführungsform werden ein Fernbereichs-Radar-Sensor bei oder um 77 GHz und ein Nahbereichs-Radar-Sensor bei oder um 24 GHz verwendet. Der Fernbereichs-Radar-Sensor weist dabei eine Reichweite von mindestens 50 m, vorzugsweise von mindestens 100 m, auf.

In einer Ausführungsform ist die Sensorplattform so konfiguriert, dass mindestens eine Kamera oder ein Radar-Sensor nach hinten ausgerichtet ist. In Ausführungsformen ermöglicht diese Ausrichtung eine Überwachung des Anhängers selbst, des Bereichs dahinter und des toten Winkels, was die Sicherheit beim Spurwechsel oder Rückwärtsfahren erheblich verbessert.

In einer Ausführungsform umfasst die Plattform zusätzlich Ultraschallsensoren. In Ausführungsformen eignen sich diese insbesondere für die präzise Abstandsmessung im unmittelbaren Nahbereich, was das Manövrieren bei niedriger Geschwindigkeit und das Einparken erleichtert.

In einer Ausführungsform ist die Plattform mit GNSS-Antennen, vorzugsweise mit RTK-Fähigkeit, ausgestattet. In Ausführungsformen wird dadurch eine hochpräzise Positionsbestimmung ermöglicht, welche vorzugsweise zentimetergenau ist.

In einer Ausführungsform erreichen die GNSS-Antennen mit RTK-Fähigkeit eine Positionsgenauigkeit von weniger als 10 cm, vorzugsweise weniger als 5 cm, und besonders vorzugsweise von weniger als 2 cm.

In einer Ausführungsform ist zusätzlich eine IMU (Inertial Measurement Unit) integriert. In Ausführungsformen wird durch die IMU, welche die Eigenbewegungen des Fahrzeugs erfasst, die Positionsbestimmung bei Signalverlust, etwa in Tunneln, ermöglicht.

In einer Ausführungsform ist mindestens ein Umweltsensor vorgesehen. In Ausführungsformen erkennen diese Umgebungsbedingungen wie Lichtverhältnisse, Niederschlag oder den Verschmutzungsgrad der Sensoroberflächen und ermöglichen eine dynamische Anpassung der Sensorparameter oder können eine Reinigung auslösen.

In einer Ausführungsform sind die Sensoren in einem aerodynamisch geformten und witterungsgeschützten Gehäuse untergebracht.

In Ausführungsformen ist die aerodynamische Formgebung des Gehäuses von großer Bedeutung. In Ausführungsformen reduziert sie den Luftwiderstand, was zu einem geringeren Kraftstoff- bzw. Energieverbrauch führt und die Entstehung von störenden Windgeräuschen bei höheren Geschwindigkeiten minimiert.

In Ausführungsformen hält das feste Gehäuse die Sensoren in einer optimalen und fest definierten Ausrichtung hält. In Ausführungsformen werden somit eine Dejustierung durch Vibrationen oder leichte Stöße während der Fahrt verhindert.

In einer weiteren Ausführungsform ist das Gehäuse formschlüssig gestaltet. In Ausführungsformen ermöglicht diese formschlüssige Gestaltung, welche über eine ausschließlich aerodynamische Gestaltung hinausgeht, eine harmonische Integration in die typischen Dachkonturen von Wohnmobilen oder Caravans. In Ausführungsformen erleichtert eine derartige Gestaltung die Montage erheblich.

In Ausführungsformen ist das Gehäuse so konzipiert, dass es mit anderen Aufbauten kombinierbar ist. In Ausführungsformen können so beispielsweise Aussparungen oder modulare Anbindungen vorgesehen sein, um die Installation neben oder in Kombination mit bestehenden Solarpanels und Dachluken zu ermöglichen, ohne deren Funktion zu beeinträchtigen.

In einer Ausführungsform umfasst das Gehäuse zudem Sensorabdeckungen, beispielsweise transparente Fenster für die optischen Kameras und Lidar-Sensoren. In Ausführungsformen sind diese Abdeckungen ein integraler Bestandteil des Witterungsschutzes und müssen für die jeweiligen Wellenlängen der Sensoren durchlässig sein, um die Qualität der Messdaten nicht zu beeinträchtigen.

In Ausführungsformen sichert der Witterungsschutz die empfindlichen elektronischen und optischen Komponenten der Sensoren vor Umwelteinflüssen wie Regen, Schnee, Hagel, Staub und UV-Strahlung. In Ausführungsformen erhöht dies die Lebensdauer der Komponenten und stellt eine zuverlässige Funktion unter anspruchsvollen Wetterbedingungen sicher.

In einer Ausführungsform weist die montierbare Einheit oder das Gehäuse eine Gesamtlänge zwischen 50 cm und 250 cm auf, vorzugsweise zwischen 80 cm und 180 cm, und besonders vorzugsweise zwischen 100 cm und 150 cm.

In einer weiteren Ausführungsform weist die Einheit oder das Gehäuse eine Gesamtbreite zwischen 30 cm und 150 cm auf, vorzugsweise zwischen 50 cm und 120 cm, und besonders vorzugsweise zwischen 70 cm und 100 cm.

In einer weiteren Ausführungsform weist die Einheit oder das Gehäuse eine Gesamthöhe, gemessen von der Dachoberfläche, zwischen 2 cm und 50 cm auf, vorzugsweise zwischen 8 cm und 30 cm, und besonders vorzugsweise zwischen 10 cm und 20 cm, um eine optimale Aerodynamik zu erzielen.

In einer Ausführungsform beträgt das Gesamtgewicht der Sensorplattform inklusive aller Sensoren und des Gehäuses zwischen 2 kg und 50 kg, vorzugsweise zwischen 5 kg und 30 kg, und besonders vorzugsweise zwischen 8 kg und 20 kg.

In einer Ausführungsform umfasst die Sensorplattform ferner eine Energieversorgungseinheit, die zur unabhängigen Energieversorgung oder Pufferung ausgebildet ist.

In Ausführungsformen liegt in dieser autarken Energieversorgungseinheit ein wesentlicher Vorteil in der Entkopplung vom primären Bordnetz des Fahrzeugs. In Ausführungsformen kann die Sensorplattform somit betrieben werden, ohne die Starterbatterie oder eine Aufbaubatterie des Fahrzeugs zu belasten. In Ausführungsformen erhöht dies die Betriebssicherheit des Gesamtfahrzeugs und stellt sicher, dass die Lebens- und Fahrfunktionen nicht durch den Energiebedarf der Sensorik beeinträchtigt werden.

In Ausführungsformen ermöglicht die Pufferungsfunktion darüber hinaus die Stabilisierung der Stromversorgung für die hochempfindlichen Sensoren. In Ausführungsformen können leistungsintensive Komponenten wie Lidar-Systeme kurzzeitige Stromspitzen verursachen. In Ausführungsformen kann die Energieversorgungseinheit diese Lastspitzen abfangen und eine konstante und saubere Spannung bereitstellen, was die Lebensdauer der Sensoren erhöht und Messfehler durch Spannungsschwankungen verhindert.

In Ausführungsformen liegt ein weiterer Vorteil in der Möglichkeit eines Dauerbetriebs, auch bei ausgeschaltetem Motor. In Ausführungsformen ist dies beispielsweise für Überwachungsfunktionen im geparkten Zustand von Nutzen, bei denen die Fahrzeugumgebung kontinuierlich erfasst wird, um auf mögliche Gefahren oder Vandalismus zu reagieren.

In einer Ausführungsform ist die Leistungsaufnahme der gesamten Sensorplattform im Betriebszustand zwischen 10 W und 1.500 W, vorzugsweise zwischen 20 W und 500 W.

In einer Ausführungsform weist die dedizierte Batterie der Energieversorgungseinheit eine Kapazität zwischen 10 Wh und 5.000 Wh auf, vorzugsweise zwischen 100 Wh und 1.500 Wh.

In einer Ausführungsform ist die Energieversorgungseinheit mit einer Solaranlage des Fahrzeugs gekoppelt.

In Ausführungsformen ermöglicht diese Kopplung es, die vorhandene Energie auf dem Dach des Fahrzeugs zu nutzen, um die Energieversorgungseinheit aufzuladen. In Ausführungsformen maximiert dies die Autarkie des Systems und reduziert den Bedarf, auf die Fahrzeugbatterie zurückzugreifen, weiter.

In einer weiteren Ausführungsform kann die Energieversorgungseinheit eine eigene, dedizierte Batterie umfassen, vorzugsweise einen Lithium-Ionen- oder LiFePO4-Akku. In Ausführungsformen ist die Kapazität dieser Batterie so bemessen, dass sie den Betrieb der Sensorplattform für eine vordefinierte Zeit, vorzugsweise für mehrere Stunden oder Tage im Überwachungsmodus, sicherstellt.

In einer Ausführungsform enthält die Einheit zur Realisierung der Pufferungsfunktion Hochleistungskondensatoren (Superkondensatoren). In Ausführungsformen sind die Hochleistungskondensatoren geeignet, um schnell hohe Ströme für kurzzeitige Lastspitzen bereitzustellen und wieder aufgeladen zu werden.

In einer Ausführungsform weist die Energieversorgungseinheit zudem ein intelligentes Lademanagement auf. In Ausführungsformen priorisiert dieses die verfügbaren Energiequellen, indem es beispielsweise vorrangig Solarstrom nutzt, bei Bedarf auf die interne Batterie zurückgreift und als letzte Option Energie aus dem Bordnetz des Fahrzeugs anfordert.

In einer Ausführungsform umfasst die Sensorplattform zusätzlich eine Vorrichtung zur automatisierten Reinigung von Sensorabdeckungen.

In Ausführungsformen ist ein Vorteil dieser Vorrichtung die Sicherstellung einer konstant hohen Datenqualität. In Ausführungsformen können Verschmutzungen auf den Sensorabdeckungen, wie beispielsweise Regentropfen, Schlamm, Insekten oder Staub, die Leistungsfähigkeit der Sensoren erheblich beeinträchtigen. In Ausführungsformen sorgt eine automatisierte Reinigung dafür, dass die "Sicht" der Sensoren frei bleibt, was die Zuverlässigkeit und Sicherheit des gesamten autonomen oder assistierten Fahrsystems erhöht.

In Ausführungsformen liegt ein weiterer Vorteil in der gesteigerten Systemverfügbarkeit und einem höheren Komfort. In Ausführungsformen muss der Fahrer nicht anhalten und auf das Fahrzeugdach steigen, um die Sensoren manuell zu reinigen. In Ausführungsformen kann das System sich selbst instand halten und bleibt auch bei langen Fahrten unter widrigen Wetterbedingungen voll funktionsfähig.

In einer Ausführungsform kann die Reinigungsvorrichtung als System mit Sprühdüsen und/oder Scheibenwischern realisiert sein. In Ausführungsformen bringen die Sprühdüsen eine Reinigungsflüssigkeit auf die Sensorabdeckungen auf, während die Scheibenwischer die gelösten Verschmutzungen mechanisch entfernen.

In einer weiteren Ausführungsform kann das System einen integrierten Vorratsbehälter für die Reinigungsflüssigkeit umfassen. In einer alternativen Ausführungsform kann die Vorrichtung auch an den Hauptbehälter der Scheibenwaschanlage des Fahrzeugs angeschlossen sein, was das Nachfüllen vereinfacht.

Die Aktivierung der Reinigung kann auf verschiedene Weisen erfolgen. In einer Ausführungsform wird sie manuell vom Fahrer über einen Schalter im Cockpit ausgelöst. In einer weiteren Ausführungsform wird die Reinigung durch die Auswertung von Sensordaten ausgelöst. In Ausführungsformen können hierzu die erfindungsgemäßen Umweltsensoren verwendet werden, die einen hohen Verschmutzungsgrad auf den Sensorabdeckungen detektieren und den Reinigungsvorgang selbstständig initiieren.

In einer Ausführungsform ist die Reinigungsvorrichtung zusätzlich mit Heizelementen für den Einsatz bei kalten Temperaturen ausgestattet. In Ausführungsformen sind diese Heizelemente in die Sensorabdeckungen integriert oder befinden sich in der Nähe der Sprühdüsen, um Eis und Schnee zu schmelzen und ein Einfrieren der Reinigungsflüssigkeit zu verhindern.

In einer Ausführungsform wird ein Luftstoß, erzeugt durch eine kleine Düse oder einen Ventilator, verwendet, um verbleibende Flüssigkeitsreste schnell zu trocknen und die Bildung von Schlieren zu verhindern.

In einer Ausführungsform ist mindestens einer der Sensoren oder eine Sensorhalterung teleskopierbar oder ausfahrbar gestaltet.

Diese mechanische Flexibilität bietet eine Reihe von signifikanten Vorteilen, insbesondere für den Einsatz auf Fahrzeugen. In Ausführungsformen ist ein Vorteil der Schutz der Sensorik vor äußeren Einflüssen. In Ausführungsformen sind die empfindlichen und oft teuren Sensoren im eingefahrenen Zustand, beispielsweise im geparkten Zustand, vor Vandalismus, Witterungseinflüssen wie Hagel und starker Sonneneinstrahlung sowie vor Verschmutzung durch beispielsweise Vogelkot geschützt. Dies erhöht die Lebensdauer und senkt die Wartungskosten.

In Ausführungsformen ist die Reduzierung der Gesamtfahrzeughöhe ein weiterer wesentlicher Vorteil. Einige Fahrzeuge sind bereits hoch. In Ausführungsformen kann die Durchfahrtshöhe für niedrige Brücken, Unterführungen oder die Einfahrt in Parkhäuser und Garagen durch das Einfahren der Sensorplattform oder einzelner hervorstehender Sensoren verringert werden. Dies erhöht die Alltagstauglichkeit des Fahrzeugs erheblich.

In Ausführungsformen wird im eingefahrenen Zustand zudem die Aerodynamik verbessert. Eine glattere Dachoberfläche ohne hervorstehende Komponenten reduziert den Luftwiderstand, was den Kraftstoff- oder Energieverbrauch senken kann, insbesondere bei Nichtgebrauch des autonomen Systems.

In einer Ausführungsform ist nur der am stärksten exponierte Sensor ausfahrbar gestaltet, vorzugsweise ein hoch aufragender 360°-Lidar-Sensor, während flachere Sensoren wie Kameras oder Radarsensoren fest im Gehäuse integriert bleiben.

In einer weiteren Ausführungsform ist nicht nur ein einzelner Sensor, sondern ein ganzes Modul oder die gesamte Plattform auf einer teleskopischen oder schwenkbaren Halterung montiert. In Ausführungsformen ermöglicht dies das Anheben der Sensoreinheit für eine optimale, hindernisfreie Sicht während des autonomen Fahrens und das Absenken in eine geschützte Ruheposition.

Die Steuerung des Ein- und Ausfahrens kann auf verschiedene Weisen realisiert werden. In einer Ausführungsform erfolgt die Steuerung manuell durch den Fahrer über einen Schalter. In einer vorteilhaften Ausführungsform ist der Mechanismus an die Fahrzeugelektronik gekoppelt und fährt die Sensoren automatisch ein, wenn die Zündung ausgeschaltet wird, und automatisch aus, wenn ein autonomer Fahrmodus aktiviert wird.

In einer weiteren Ausführungsform ist der eingefahrene Zustand so gestaltet, dass der Sensor oder die Plattform bündig (flush) mit der Oberfläche des restlichen Gehäuses oder des Fahrzeugdachs abschließt. In Ausführungsformen entsteht dadurch eine besonders glatte und aerodynamisch günstige Oberfläche. Der Sensor kann dabei in eine speziell dafür vorgesehene, abgedichtete Vertiefung im Gehäuse einfahren.

In einer Ausführungsform umfasst die Sensorplattform ferner mindestens einen Sensor aus der Gruppe bestehend aus: Ultraschallsensoren, GNSS-Antennen mit RTK-Fähigkeit, IMU (Inertial Measurement Unit) und Umweltsensoren.

In Ausführungsformen bietet die Integration von Ultraschallsensoren eine kosteneffiziente und äußerst zuverlässige Methode zur Abstandsmessung im unmittelbaren
Nahbereich (typischerweise bis zu wenigen Metern). In Ausführungsformen ist dies besonders für große Fahrzeuge vorteilhaft, da die Sicht direkt um das Fahrzeug herum oft eingeschränkt ist.

In einer Ausführungsform sind die Ultraschallsensoren an den Ecken und an der Vorder- und Rückseite des Gehäuses der Sensorplattform angebracht und leicht nach unten geneigt, um den Bereich direkt um das Fahrzeug herum abzudecken. In einer anderen Ausgestaltung können die Daten der Ultraschallsensoren mit den Kamerabildern fusioniert werden, um eine visuelle Einparkhilfe mit akustischer Warnung zu realisieren.

In Ausführungsformen steigert die Ausstattung der Plattform mit einer GNSS-Antenne (Global Navigation Satellite System) mit RTK-Fähigkeit (Real-Time Kinematic) die Genauigkeit der absoluten Fahrzeugposition von mehreren Metern (Standard-GPS) auf Zentimetergenauigkeit. In Ausführungsformen ist dieser erhebliche Genauigkeitsgewinn die Grundlage für fortgeschrittene autonome Fahrfunktionen wie präzises Spurhalten auf schmalen Landstraßen, das exakte Navigieren in komplexen Kreuzungsbereichen und die Nutzung von hochauflösenden Karten (HD-Maps).

In einer vorteilhaften Ausführungsform werden zwei GNSS-Antennen auf der Plattform montiert. In Ausführungsformen ermöglicht diese Konfiguration die sofortige und hochpräzise Bestimmung der Fahrzeugausrichtung (Heading), ohne dass sich das Fahrzeug bewegen muss. In Ausführungsformen ist dies stabiler als die alleinige Berechnung aus der Bewegungsrichtung.

In einer Ausführungsform ist/sind die Antenne(n) an einer Position auf dem Gehäuse angebracht, die eine maximale, ungestörte Sicht zum Himmel gewährleistet.

In Ausführungsformen misst eine IMU die Eigenbewegungen des Fahrzeugs, also Beschleunigungen und Drehraten (Gier-, Nick- und Wankrate). In Ausführungsformen liegt ihr wesentlicher Vorteil in der Unterstützung der Positionsbestimmung bei GNSS-Signalverlust. In Ausführungsformen kann die IMU in Tunneln, Parkhäusern, urbanen Schluchten oder dichten Wäldern die Fahrzeugposition für eine gewisse Zeit durch Koppelnavigation (Dead Reckoning) fortschreiben und so die Kontinuität der Navigation sicherstellen. In Ausführungsformen liefert sie zudem wichtige Daten für die Fahrzeugstabilisierung und die Fusion mit anderen Sensordaten, um ein glatteres und realistischeres Umgebungsmodell zu erzeugen.

In einer Ausführungsform ist die IMU starr mit dem Gehäuse der Sensorplattform verbunden und so nah wie möglich am Schwerpunkt des Fahrzeugs montiert. In Ausführungsformen wird die Fahrzeugdynamik dadurch präzise erfasst. In Ausführungsformen werden die Daten der IMU in Echtzeit mit den GNSS-Daten in einem Kalman-Filter fusioniert, um eine permanent optimierte Schätzung der Fahrzeugposition und -orientierung zu erhalten

In Ausführungsformen liegt der Vorteil von Umweltsensoren darin, das System adaptiv und "intelligent" zu machen. In Ausführungsformen kann die Erkennung von Niederschlag (Regen, Schnee) dazu genutzt werden, die Fahralgorithmen anzupassen (z.B. größere Sicherheitsabstände) oder die automatische Reinigung auszulösen. Die Messung
der Lichtverhältnisse ermöglicht die optimale Anpassung der Kameraeinstellungen (z.B. bei der Einfahrt in einen Tunnel).

In einer Ausführungsform umfasst ein Umweltsensor-Modul einen Regensensor (z.B. optischbasiert), einen Helligkeitssensor (Photodiode) und/oder einen Temperatursensor. In Ausführungsformen kann zur Verschmutzungserkennung ein dedizierter Sensor verwendet werden oder ein Software-Algorithmus, der die Bilder der Hauptkameras analysiert und bei Trübung oder teilweiser Verdeckung Alarm schlägt.

In einer Ausführungsform umfasst die Sensorplattform ferner mindestens zwei Sensoren aus der Gruppe bestehend aus: Ultraschallsensoren, GNSS-Antennen mit RTK-Fähigkeit, IMU (Inertial Measurement Unit) und Umweltsensoren.

In einer Ausführungsform umfasst die Sensorplattform ferner mindestens drei Sensoren aus der Gruppe bestehend aus: Ultraschallsensoren, GNSS-Antennen mit RTK-Fähigkeit, IMU (Inertial Measurement Unit) und Umweltsensoren.

In einer Ausführungsform umfasst die Sensorplattform eine GNSS-Antenne mit RTK-Fähigkeit und eine IMU. In Ausführungsformen wird durch diese Kombination ein hochrobustes Lokalisierungssystem geschaffen, wobei die IMU Signalverluste der GNSS-basierten Positionsbestimmung durch Koppelnavigation überbrückt. In Ausführungsformen wird dadurch eine kontinuierliche und genaue Positionsbestimmung unter allen Bedingungen gewährleistet.

In einer Ausführungsform umfasst die Sensorplattform Umweltsensoren und Ultraschallsensoren. In Ausführungsformen wird durch diese Kombination die Leistung des Systems an die Umgebungsbedingungen angepasst. In Ausführungsformen wird beispielsweise die Empfindlichkeit der Ultraschallsensoren bei erkanntem Regen erhöht. In Ausführungsformen wird somit eine zuverlässige Erfassung von Hindernissen im Nahbereich gewährleistet.

In einer Ausführungsform umfasst die Sensorplattform Umweltsensoren, eine GNSS-Antenne und eine IMU. In Ausführungsformen wird durch diese Kombination eine kontextsensitive Navigation ermöglicht. In Ausführungsformen nutzt das System beispielsweise bei erkannten vereisten Bedingungen die von GNSS und IMU gelieferte Position. In Ausführungsformen wird dadurch die Fahrstrategie entsprechend angepasst.

In einer Ausführungsform umfasst die Sensorplattform Ultraschallsensoren, eine GNSS-Antenne und eine IMU. In Ausführungsformen führt das Fahrzeug durch diese Kombination äußerst präzise Manöver durch. In Ausführungsformen steuert die GNSS/IMU-Einheit das Fahrzeug auf einen Zielpunkt. In Ausführungsformen übernehmen die Ultraschallsensoren die finale, zentimetergenaue Positionierung relativ zu Hindernissen.

In einer Ausführungsform umfasst die Sensorplattform Ultraschallsensoren, eine GNSS-Antenne mit RTK-Fähigkeit, eine IMU und Umweltsensoren. In Ausführungsformen wird durch diese Kombination die höchste Stufe an Redundanz und Situationsbewusstsein geboten. In Ausführungsformen wird eine präzise und lückenlose Navigation sowie deren intelligente Anpassung an die Fahrsituation ermöglicht. In Ausführungsformen wird dadurch die Sicherheit und Zuverlässigkeit des autonomen Systems maximiert.

In einem weiteren Aspekt betrifft die Erfindung eine Sensorträgerarchitektur für ein Fahrzeug, umfassend einen Sensorträger zur Aufnahme von mindestens einer Sensoreinheit, dadurch gekennzeichnet, dass der Sensorträger für eine kraft- und/oder formschlüssige Integration in eine primäre tragende Strukturkomponente des Fahrzeugs ausgebildet ist, und mechanische Referenzelemente zwischen dem Sensorträger und der tragenden Strukturkomponente vorgesehen sind, sodass eine eindeutige und reproduzierbare Lage- und Orientierungsbestimmung des Sensorträgers relativ zu einem fahrzeugfesten Strukturkoordinatensystem ermöglicht wird.

In einer bevorzugten Ausführungsform ist das Fahrzeug ein Freizeitfahrzeug. In Ausführungsformen stellt diese Architektur einen fundamentalen Unterschied zum Stand der Technik dar, bei dem Sensorträger typischerweise an nicht-tragenden Verkleidungs- oder Karosserieteilen befestigt werden. In Ausführungsformen wird der Sensorträger selbst zu einer geometrisch stabilen Referenz durch die direkte Anbindung an eine tragende Strukturkomponente. In Ausführungsformen besteht ein Vorteil darin, dass die räumliche Lage und Orientierung der Sensorik relativ zur Kernstruktur des Fahrzeugs dauerhaft und unveränderlich definiert ist. Dies löst das Problem, dass sich bei herkömmlichen Systemen die Sensorposition durch Reparaturen, Alterung oder durch den Austausch von Karosserieteilen relativ zur tragenden Struktur verändern kann, was zu einer De-Kalibrierung führt. In Ausführungsformen ermöglicht die erfindungsgemäße Architektur somit eine außergewöhnlich hohe Datenintegrität und Langzeitstabilität.

In Ausführungsformen ermöglicht die erfindungsgemäße Architektur, im Gegensatz zu herkömmlichen Systemen, deren Kalibrierung über die Zeit durch Materialermüdung oder thermische Verformung von Verkleidungsteilen degradieren kann, ein konstant hohes Sicherheitsniveau über die gesamte Lebensdauer des Fahrzeugs.

In Ausführungsformen ermöglichen die mechanischen Referenzelemente, dass der Sensorträger bei der Montage und auch nach einer etwaigen Demontage und Wiedermontage exakt in der gleichen Position und Ausrichtung fixiert wird. In Ausführungsformen verhindern die mechanischen Referenzelemente konstruktiv, dass der Sensorträger oder eine Sensoreinheit an einer anderen als der exakt vordefinierten Position montiert werden kann. Die geometrische Passung der Referenzelemente macht einen fehlerhaften Einbau strukturell unmöglich. In Ausführungsformen wird dadurch eine aufwändige Neukalibrierung der Sensorik relativ zum Fahrzeugchassis überflüssig.

In einer weiteren Ausführungsform kann die kraft- und/oder formschlüssige Integration durch verschiedene technische Mittel realisiert werden. In einer Ausführungsform ist der Sensorträger direkt mit der tragenden Strukturkomponente verschweißt, durch hochfeste Schraubverbindungen an vordefinierten, verstärkten Anschraubpunkten verschraubt, oder mittels Strukturklebstoffen verklebt. In einer vorteilhaften Ausführungsform kann der Sensorträger selbst als Teil der tragenden Strukturkomponente ausgebildet sein, beispielsweise als spezifisch geformter Abschnitt eines Dachquerträgers.

In einer weiteren Ausführungsform sind die Referenzelemente als eine Kombination aus Passstiften und präzise gefertigten Anlageflächen ausgebildet. In Ausführungsformen definieren die Passstifte (Zentrierdorne) die exakte Position in der Ebene, während die Anlageflächen die Ausrichtung (Verkippung) festlegen. In weiteren Ausführungsformen werden konische und/oder V-förmige Zentrierelemente verwendet, um eine spielfreie und wiederholgenaue Positionierung zu gewährleisten.

In einer weiteren Ausführungsform ist der Sensorträger aus einem Material mit geringer Wärmeausdehnung gefertigt, wie beispielsweise Aluminium- oder Stahllegierungen. In Ausführungsformen ermöglicht dies, dass sich die Referenzgeometrie auch bei starken Temperaturschwankungen nicht signifikant verändert.

In einer Ausführungsform ist das fahrzeugfeste Strukturkoordinatensystem dabei das Koordinatensystem, das durch die unveränderlichen, tragenden Teile des Fahrzeugchassis oder der selbsttragenden Karosserie definiert ist und als absolute Referenz für alle fahrzeugdynamischen Berechnungen und die Sensorfusion dient.

In einer Ausführungsform ist die Sensorträgerarchitektur dadurch gekennzeichnet, dass der Sensorträger als dauerhaft strukturstabile Referenzplattform ausgebildet ist, die ihre geometrische Referenz zum fahrzeugfesten Strukturkoordinatensystem unabhängig von austauschbaren oder deformierbaren Karosseriemodulen beibehält.

In einer Ausführungsform wird die strukturelle Stabilität des Sensorträgers durch
dessen spezifische konstruktive Gestaltung erreicht. In Ausführungsformen ist der Träger als monolithisches Gussteil aus Aluminium oder als geschweißte Konstruktion aus hochfesten Stahlprofilen ausgeführt.

In einer Ausführungsform ist der Sensorträger an primär tragenden Strukturkomponenten befestigt. In einer weiteren Ausführungsform wird ein definierter struktureller Spalt zu allen angrenzenden, nicht-tragenden Verkleidungsteilen eingehalten. In Ausführungsformen ermöglicht dies die Unabhängigkeit von deformierbaren Karosseriemodulen.

In einer Ausführungsform umfassen die austauschbaren oder deformierbaren Karosseriemodule, von denen die Plattform unabhängig ist, insbesondere Stoßfänger, Front- und Heckverkleidungen (Fascia), Kotflügel, Kühlergrills, Türen oder andere äußere Kunststoff- oder Blechverkleidungen, die nicht zur primären Lastpfadstruktur des Fahrzeugs gehören.

In Ausführungsformen liegt ein entscheidender Vorteil dieser Ausgestaltung in der Robustheit der Kalibrierung über den gesamten Fahrzeuglebenszyklus. In Ausführungsformen wird die Position der erfindungsgemäßen Referenzplattform durch einen Austausch dieser Teile nicht beeinflusst, im Gegensatz zu Sensoren, die an Stoßfängern, Kotflügeln oder anderen Verkleidungsteilen montiert sind. In Ausführungsformen bleibt nach einer Reparatur, beispielsweise dem Tausch eines Stoßfängers nach einem kleinen Unfall, die Kalibrierung der auf der Referenzplattform montierten Sensoren erhalten. Dies spart erhebliche Kosten und Zeit für eine aufwändige Neukalibrierung und ermöglicht, dass die autonomen Fahrfunktionen sofort wieder mit voller Genauigkeit zur Verfügung stehen.

In Ausführungsformen führen diese Einsparungen bei Kalibrierungskosten und die kürzeren Reparaturzeiten zu signifikant reduzierten Gesamtbetriebskosten (Total Cost of Ownership, TCO), was insbesondere für Flottenbetreiber von großem wirtschaftlichem Vorteil ist. In weiteren Ausführungsformen steigern die garantierte Datenintegrität und die einfache Wartbarkeit den langfristigen Wert und den Wiederverkaufswert eines mit autonomen Funktionen ausgestatteten Fahrzeugs.

In Ausführungsformen ist diese dauerhafte Stabilität die technische Grundvoraussetzung für eine präzise Ereignisdokumentation. In Ausführungsformen können die aufgezeichneten Daten nur als verlässlicher Beweis für ein Unfallgeschehen dienen, wenn die Sensorposition zweifelsfrei und unveränderlich ist.

In einer Ausführungsform ist die Sensorträgerarchitektur dadurch gekennzeichnet, dass die Referenzelemente so ausgebildet sind, dass von den Sensoreinheiten erfasste Messdaten eindeutig dem fahrzeugfesten Strukturkoordinatensystem zugeordnet und über den Lebenszyklus des Fahrzeugs hinweg reproduzierbar ausgewertet werden können.

In einer Ausführungsform wird diese Zuordnung dadurch realisiert, dass für jede Sensoreinheit eine Transformationsmatrix (bestehend aus Rotation und Translation) ermittelt wird. In Ausführungsformen beschreibt diese Matrix die exakte geometrische Beziehung zwischen dem Koordinatensystem der jeweiligen Sensoreinheit und dem fahrzeugfesten Strukturkoordinatensystem.

In einer Ausführungsform wird diese Transformationsmatrix während eines End-of-Line-Kalibrierungsprozesses in der Fahrzeugfertigung einmalig ermittelt und in einem Speicher im Fahrzeug, vorzugsweise in einem zentralen Steuergerät, permanent abgelegt.

In Ausführungsformen ist die eindeutige und reproduzierbare Zuordnung der Sensordaten zu einem unveränderlichen Referenzsystem im Fahrzeug die Grundvoraussetzung für die Integrität und Verlässlichkeit der Daten. Im Gegensatz zu herkömmlichen Systemen, bei denen die Sensorposition eine Variable sein kann, wird durch die erfindungsgemäße Sensorträgerarchitektur eine feste, bekannte Beziehung geschaffen.

In Ausführungsformen besteht ein wesentlicher Vorteil darin, dass die erfassten Daten absolut und vergleichbar werden. In Ausführungsformen ermöglicht dies, Daten, die zu unterschiedlichen Zeitpunkten oder sogar nach Reparaturen erfasst wurden, direkt miteinander zu vergleichen. In Ausführungsformen können die Daten nur als objektive Nachweise herangezogen werden, wenn die Position und Ausrichtung des Sensors zum Zeitpunkt der Aufnahme zweifelsfrei bekannt und unveränderlich ist.

Ein weiterer Vorteil liegt in der verbesserten Fähigkeit zu Langzeit-Lernprozessen und Kartierung (SLAM). In Ausführungsform kann das Fahrzeug eine hochpräzise Karte seiner Umgebung erstellen und diese über die Zeit verfeinern, da die Referenz zur eigenen Struktur konstant bleibt. In Ausführungsformen sind Veränderungen in der erfassten Umgebung somit tatsächliche Veränderungen und keine Artefakte einer verschobenen Sensorposition.

In einer Ausführungsform ist die Sensorträgerarchitektur dadurch gekennzeichnet, dass der Sensorträger definierte mechanische Schnittstellen zur modularen und austauschbaren Aufnahme der Sensoreinheiten aufweist, ohne die Referenzgeometrie zur tragenden Strukturkomponente zu verändern.

In Ausführungsformen ist die Architektur somit zukunftssicher gestaltet. In Ausführungsformen können zukünftige Generationen von Sensoren, wie beispielsweise 4D-Radarsensoren oder neuartige Lidar-Technologien, einfach durch den Austausch der Sensoreinheiten integriert werden, ohne die grundlegende und kostspielige Fahrzeugarchitektur selbst ändern zu müssen.

In einer Ausführungsform ist die definierte mechanische Schnittstelle als eine Kombination aus einer Montageplatte mit einem präzisen Lochbild und hochgenauen Positionierelementen ausgebildet. In Ausführungsformen sind diese Positionierelemente als Passstifte (Zentrierdorne) oder konische Zentrieraufnahmen ausgeführt, wodurch eine wiederholgenaue und spielfreie Positionierung des Sensormoduls auf dem Träger ermöglicht wird. Diese Positionierelemente wirken als formschlüssige Zwangsführung, die sicherstellt, dass bei einem Austausch des Moduls die exakte Referenzgeometrie ohne Abweichung reproduziert wird.

In einer Ausführungsform ist die Schnittstelle als Schnellwechselsystem realisiert, vorzugsweise mittels eines Bajonettverschlusses, eines Schwalbenschwanz-Führungssystems oder eines Verriegelungsmechanismus. In Ausführungsformen ermöglicht dies einen schnellen, werkzeuglosen Austausch der Sensoreinheiten.

In einer Ausführungsform ist die Schnittstelle als kombinierte elektro-mechanische Schnittstelle ausgeführt. In Ausführungsformen bedeutet das, dass beim mechanischen Anbringen des Sensormoduls gleichzeitig ein integrierter, mehrpoliger Stecker die Verbindung für die Stromversorgung und die Datenübertragung herstellt.

In Ausführungsformen kann der Austauschprozess dadurch weiter vereinfacht werden, dass jede Sensoreinheit einen eigenen nicht-flüchtigen Speicher (z.B. ein EEPROM) enthalten. In Ausführungsformen sind in diesem Speicher die individuellen, intrinsischen Kalibrierungsparameter des Sensors sowie eine eindeutige Seriennummer abgelegt. In Ausführungsformen kann das zentrale Steuergerät diese Informationen nach dem Einbau auslesen und den Sensor automatisch in das Gesamtsystem integrieren ("Plug-and-Play").

In einer Ausführungsform ist die Sensorträgerarchitektur dadurch gekennzeichnet, dass die primäre tragende Strukturkomponente eine tragende Dachstruktur, ein struktureller Querträger oder eine lasttragende Komponente eines Fahrzeugbasismoduls ist.

In einer Ausführungsform ist die tragende Dachstruktur ein Dachlängsträger (am Rand des Daches), ein Dachquerträger (auch als Dachspriegel bezeichnet, der die Seiten verbindet) und/oder der obere Anschlussbereich einer A-, B- oder C-Säule, wo diese in die Dachstruktur übergeht.

In einer Ausführungsform ist der strukturelle Querträger ein Querträger im Bereich der Stirnwand, ein Sitzquerträger im Bodenblech, der die B-Säulen verbindet, oder der Hauptträger des Instrumententafelsupports, sofern dieser als strukturelles Element ausgelegt ist.

In einer Ausführungsform ist die Komponente eines Fahrzeugbasismoduls ein Längsträger des Leiterrahmens oder einer der Querträger, die die Längsträger verbinden, vorzugsweise bei Fahrzeugen in Rahmenbauweise, wie beispielsweise bei Nutzfahrzeugen oder Pick-ups.

In einer Ausführungsform ist die lasttragende Komponente ein Schwellerträger (der untere Längsträger unter den Türen) oder ein Knotenpunkt, an dem mehrere tragende Blechstrukturen zusammenlaufen, wie beispielsweise am Übergang von der A-Säule zum Schweller und zur Stirnwand, vorzugsweise bei Fahrzeugen mit selbsttragender Karosserie.

In Ausführungsformen bietet eine tragende Dachstruktur den Vorteil einer erhöhten Position. In Ausführungsformen verfügen Sensoren, die daran montiert sind, eine "Vogelperspektive" mit minimaler Verdeckung durch andere Verkehrsteilnehmer oder die eigene Fahrzeugkarosserie. In Ausführungsformen ist dies ideal für eine 360°-Umfelderfassung. In Ausführungsformen sind gleichzeitig die Längs- und Querträger des Daches ein integraler Bestandteil der Sicherheitszelle des Fahrzeugs und somit äußerst formstabil.

In Ausführungsformen zeichnet sich ein struktureller Querträger, beispielsweise im Bereich der Stirnwand (Firewall) oder des Fahrzeugbodens, durch eine hohe Steifigkeit aus. In Ausführungsformen sind diese Komponenten darauf ausgelegt, im Falle eines Unfalls hohe Kräfte aufzunehmen und zu verteilen. In Ausführungsformen bieten sie daher eine besonders verlässliche und unveränderliche Montagebasis für den Sensorträger.

In Ausführungsformen stellt eine lasttragende Komponente eines Fahrzeugbasismoduls (Chassis) die fundamentalste Anbindungsmöglichkeit dar. In Ausführungsformen verknüpft sie den Sensorträger direkt mit der absoluten Referenz des Fahrzeugs und ist sowohl für Fahrzeuge mit selbsttragender Karosserie (Monocoque) als auch für solche mit separatem Rahmen (Leiterrahmen) anwendbar.

In einer Ausführungsform ist die Sensorträgerarchitektur dadurch gekennzeichnet, dass das Fahrzeug ein Freizeitfahrzeug ist und die primäre tragende Strukturkomponente Teil der Dachstruktur des Freizeitfahrzeugs ist.

In Ausführungsformen wird durch die Anwendung auf Freizeitfahrzeuge und deren Dachstruktur eine besonders vorteilhafte Kombination geschaffen. In Ausführungsformen bietet die hohe Montageposition auf dem Dach eines solchen Fahrzeugs eine überlegene, hindernisfreie 360-Grad-Sicht, welche für die sichere Navigation der oft großen und unübersichtlichen Fahrzeuge entscheidend ist. In Ausführungsformen wird durch die Anbindung an die tragende Dachstruktur die Stabilitätsproblematik von großen Wohnmobilaufbauten, die zu Schwingungen neigen können, gelöst. In Ausführungsformen wird somit sichergestellt, dass die Sensorreferenz auch bei Verwindungen des Aufbaus stabil bleibt. In Ausführungsformen ermöglicht diese Integration eine harmonische und platzsparende Einpassung neben oder zwischen anderen typischen Dachaufbauten wie Solaranlagen oder Dachluken, was im Stand der Technik ein erhebliches Problem darstellt.

In einer Ausführungsform ist das Freizeitfahrzeug ein Wohnmobil, ein Wohnwagen oder ein Caravan.

In einer Ausführungsform ist die tragende Dachstruktur Teil eines Gitterrohrrahmens der Kabine des Freizeitfahrzeugs, wobei der Sensorträger direkt an diesen Rahmen angeschweißt oder geschraubt ist.

In einer Ausführungsform ist die tragende Dachstruktur eine verstärkte Rahmenkonstruktion, die eine Dachluke oder eine Klimaanlage umgibt. In Ausführungsformen wird der Sensorträger an dieser bereits vorhandenen und verstärkten Rahmenkonstruktion angebracht.

In einer Ausführungsform ist die tragende Dachstruktur ein tragender Längs- oder Querträger, der Teil der selbsttragenden Sandwich-Konstruktion des Wohnmobilaufbaus ist.

In einer Ausführungsform ist die Sensorträgerarchitektur dadurch gekennzeichnet, dass die mindestens eine Sensoreinheit eine Kombination aus mindestens einem Lidar-Sensor, mindestens einem Radar-Sensor und mindestens einer optischen Kamera umfasst.

In Ausführungsformen wird durch diese spezifische Kombination der drei Sensortypen eine äußerst robuste und redundante Umfelderfassung realisiert. In Ausführungsformen ergänzen sich die unterschiedlichen physikalischen Prinzipien der Sensoren gegenseitig. In Ausführungsformen liefert der Lidar-Sensor eine präzise dreidimensionale Punktwolke der Umgebung, der Radar-Sensor erfasst zuverlässig die Entfernung und Geschwindigkeit von Objekten auch bei schlechter Witterung, und die optische Kamera ermöglicht die Klassifizierung von Objekten und das Erkennen von Farben und Texturen, wie bei Verkehrszeichen oder Fahrbahnmarkierungen. In Ausführungsformen wird durch die Fusion der Daten dieser drei Sensortypen ein umfassendes und verlässliches Umgebungsmodell geschaffen, das die Grundlage für sichere Fahrentscheidungen bildet.

In einer Ausführungsform umfasst die Sensoreinheit mindestens zwei, vorzugsweise vier oder mehr, optische Kameras. In Ausführungsformen sind diese Kameras so angeordnet, dass sie eine lückenlose 360-Grad-Sicht um das Fahrzeug ermöglichen.

In einer Ausführungsform ist mindestens eine der optischen Kameras als Stereokamera ausgebildet, um eine verbesserte direkte Tiefenwahrnehmung zu ermöglichen.

In einer Ausführungsform weisen die optischen Kameras eine Auflösung von mindestens 1 Megapixel auf, vorzugsweise von mindestens 2 Megapixeln, und besonders vorzugsweise von mindestens 5 Megapixeln.

In einer Ausführungsform umfasst die Kombination einen Fernbereichs-Radarsensor, der vorzugsweise im 77-GHz-Band arbeitet, und mehrere Nahbereichs-Radarsensoren, die beispielsweise zur Überwachung der toten Winkel in den Ecken der Architektur platziert sind.

In einer Ausführungsform ist der Lidar-Sensor als mechanisch rotierender 360-Grad-Sensor ausgeführt, um eine vollständige Rundumsicht zu gewährleisten. In einer alternativen Ausführungsform ist der Lidar-Sensor als nicht-beweglicher Solid-State-Lidar mit einem definierten, nach vorne gerichteten Sichtfeld ausgeführt.

In einer Ausführungsform weist der Lidar-Sensor eine Reichweite von mindestens 100 m auf, vorzugsweise von mindestens 200 m, und besonders vorzugsweise von mindestens 250 m.

In einer Ausführungsform sind die Sensoren der Kombination gezielt zur Abdeckung unterschiedlicher Bereiche angeordnet. In Ausführungsformen umfasst dies eine nach vorne gerichtete Anordnung aus einer Weitwinkel-, einer Normal- und einer Teleobjektiv-Kamera, um sowohl den Nahbereich als auch weit entfernte Objekte optimal zu erfassen.

In einem weiteren Aspekt betrifft die Erfindung ein Fahrzeug, welches die Sensorträgerarchitektur umfasst.

In Ausführungsformen bietet ein solches Fahrzeug ein höheres Maß an Sicherheit und Zuverlässigkeit für autonome und assistierte Fahrfunktionen, da die Basis der Sensorerfassung von Grund auf stabil und verlässlich ist. In Ausführungsformen wird durch die integrale Bauweise die Datenintegrität über die gesamte Lebensdauer des Fahrzeugs gewährleistet, was den Wert und die Zukunftsfähigkeit des Fahrzeugs erhöht. In Ausführungsformen wird das Fahrzeug selbst zur Grundlage für fortschrittliche Dienste, wie eine gerichtsverwertbare Ereignisdokumentation, die auf den reproduzierbaren Sensordaten basieren. In Ausführungsformen wird die Wartung und Aufrüstung des Fahrzeugs vereinfacht, da Sensormodule ohne aufwändige Neukalibrierung des Gesamtsystems ausgetauscht werden können, was die Gesamtbetriebskosten für den Fahrzeughalter senkt.

In einer Ausführungsform ist das Fahrzeug ein Freizeitfahrzeug, wie beispielsweise ein Wohnmobil, ein Wohnwagen oder ein Caravan. In einer alternativen Ausführungsform ist das Fahrzeug ein Personenkraftwagen (PKW) oder ein Nutzfahrzeug, wobei die Sensorträgerarchitektur in dessen selbsttragende Karosserie oder Rahmenstruktur integriert ist.

In einer Ausführungsform ist das Fahrzeug für das teilautonome Fahren gemäß SAE-Level 2 oder 3 oder für das hoch- bis vollautonome Fahren gemäß SAE-Level 4 oder 5 ausgelegt.

In einer Ausführungsform umfasst das Fahrzeug die Sensorträgerarchitektur in Kombination mit einer zentralen Verarbeitungseinheit, die dazu ausgebildet ist, die von der Architektur gelieferten, strukturreferenzierten Sensordaten zu fusionieren und daraus Steuerbefehle für die Fahrzeugaktuatoren zu generieren.

Es versteht sich, dass die in der vorliegenden Beschreibung, den Ansprüchen und den (falls vorhanden) Figuren offenbarten Merkmale und Ausführungsformen in beliebiger Weise miteinander kombiniert werden können, soweit eine solche Kombination für den Fachmann auf dem betreffenden technischen Gebiet nicht technisch unsinnig ist. Insbesondere können Merkmale, die im Zusammenhang mit einem bestimmten Aspekt der Erfindung, wie der Sensorplattform, beschrieben sind, auch auf andere Aspekte, wie die Sensorträgerarchitektur oder das Fahrzeug, angewendet werden und umgekehrt. Die Erfindung bezieht sich demnach auf jede technisch sinnvolle Kombination der hierin offenbarten Merkmale.

### DETAILLIERTE BESCHREIBUNG DER ERFINDUNG

Die vorliegende Erfindung bezieht sich auf eine Sensorplattform zur Integration auf dem Dach eines Fahrzeugs.

Eine Sensorplattform bezeichnet eine Baugruppe oder ein System, das eine Mehrzahl von Sensoren aufnimmt, anordnet und deren Daten für einen übergeordneten Zweck bereitstellt. In Ausführungsformen ist die Sensorplattform modular aufgebaut und besteht aus einer oder mehreren Einheiten. In weiteren Ausführungsformen ist sie aerodynamisch integrierbar und speziell für die Montage auf dem Dach von Freizeitfahrzeugen konzipiert.

Der Begriff "Integration auf dem Dach" beschreibt die Anbringung oder Montage einer Vorrichtung auf der Dachoberfläche eines Fahrzeugs. In Ausführungsformen bedeutet dies, dass die Plattform auf dem Dach montiert wird. In weiteren Ausführungsformen kann die Integration aerodynamisch und formschlüssig in die typischen Dachstrukturen von Wohnmobilen erfolgen und ist mit anderen Dachelementen wie Solarpanels oder Dachluken kombinierbar.

Ein Freizeitfahrzeug ist ein Fahrzeug, das vorrangig für Freizeit-, Reise- und Wohnzwecke genutzt wird. In Ausführungsformen umfasst der Begriff Freizeitfahrzeug insbesondere Wohnmobile, Wohnwagen, Caravans und Anhänger. In Ausführungsformen kann dies auch Gespanne, wie Caravan-Zugfahrzeug-Anhängerkombinationen, einschließen.

"Teil- oder vollautonomes Fahren" bezeichnet Fahrzustände, bei denen das Fahrzeug einen Teil oder alle Aufgaben der Fahraufgabe selbstständig, ohne direkten Eingriff des Fahrers, durchführt. In Ausführungsformen wird dieses Fahren durch die von der Sensorplattform gelieferten Daten ermöglicht und unterstützt. In weiteren Ausführungsformen steht dies in Verbindung mit einer autonomen Fahrsteuerungseinheit im Fahrzeug.

Ein Lidar-Sensor (Light Detection and Ranging) ist ein Sensor, der mittels ausgesandter Lichtimpulse, typischerweise Laserstrahlen, Abstände zu Objekten misst und eine dreidimensionale Darstellung der Umgebung erzeugt. In Ausführungsformen ist der Lidar-Sensor als 360°-System ausgebildet, das eine vollständige Rundumsicht ermöglicht. In weiteren Ausführungsformen ist dieser zentral auf der Plattform positioniert.

Optische Kameras sind Sensoren, die elektromagnetische Strahlung im sichtbaren Lichtspektrum erfassen, um Bilder der Umgebung zu erzeugen. In Ausführungsformen können die optischen Kameras als monokulare oder als stereoskopische Systeme (Stereo) ausgeführt sein, wobei der Anspruch mindestens zwei Kameras fordert. In weiteren Ausführungsformen sind die Kameras in den Ecken der Plattform angeordnet.

Ein Radar-Sensor ist ein Sensor, der Radiowellen aussendet und deren Reflexionen empfängt, um die Entfernung, den Winkel und die Geschwindigkeit von Objekten zu bestimmen. In Ausführungsformen können die Radar-Sensoren in verschiedenen Frequenzbändern arbeiten, beispielsweise bei 77 GHz oder 24 GHz.

Eine Datenverbindungseinheit ist eine Komponente, die für die Übertragung von Daten von einem Ort zu einem anderen verantwortlich ist. In Ausführungsformen verbindet diese Einheit die Sensoren der Plattform mit einer zentralen Verarbeitungseinheit im Fahrzeug. In weiteren Ausführungsformen kann diese Verbindung kabelgebunden oder drahtlos realisiert sein.

Eine Verarbeitungseinheit im Fahrzeug ist eine Recheneinheit, typischerweise ein Computer oder ein Steuergerät, das Daten empfängt, verarbeitet und darauf basierend Aktionen ausführt oder Informationen bereitstellt. In Ausführungsformen ist dies eine zentrale Einheit, welche die Daten von der Datenverbindungseinheit empfängt. In weiteren Ausführungsformen kann diese Einheit eine autonome Fahrsteuerungseinheit sein, welche die Steuerung des Fahrzeugs übernimmt.

Eine montierbare Einheit ist eine physische Baugruppe, die als ein oder mehrere Teile ausgeführt sein kann und dafür vorgesehen ist, an einer größeren Struktur angebracht zu werden. In Ausführungsformen kann die Sensorplattform aus einer einzelnen montierbaren Einheit oder aus mehreren separaten Einheiten bestehen. In weiteren Ausführungsformen ist diese Einheit als aerodynamische und witterungsgeschützte Gehäuseeinheit ausgebildet.

Ein aerodynamisch geformtes und witterungsgeschütztes Gehäuse ist eine physische Hülle, die Komponenten aufnimmt und so gestaltet ist, dass sie den Luftwiderstand minimiert und gleichzeitig den Inhalt vor Umwelteinflüssen schützt. In Ausführungsformen schützt das Gehäuse die Sensoren vor Witterungseinflüssen wie Regen, Schmutz und Staub und ist so geformt, dass es den Luftwiderstand und die Windgeräusche des Fahrzeugs reduziert. In weiteren Ausführungsformen hält das Gehäuse die Sensoren in einer optimalen und festen Ausrichtung und ist formschlüssig in die Dachkontur des Fahrzeugs integrierbar.

Eine Energieversorgungseinheit ist eine Komponente, die dafür ausgelegt ist, elektrische Energie für den Betrieb anderer Systemteile bereitzustellen. In Ausführungsformen ist die Energieversorgungseinheit für eine unabhängige Energieversorgung der Sensorplattform oder zur Pufferung von Lastspitzen ausgebildet. In weiteren Ausführungsformen kann sie eine eigene Batterie umfassen, um einen Betrieb auch bei ausgeschaltetem Fahrzeug zu ermöglichen.

Eine Solaranlage ist ein System, das mittels Solarzellen Sonnenlicht in elektrische Energie umwandelt. In Ausführungsformen ist die Solaranlage die bereits auf dem Dach des Fahrzeugs vorhandene Anlage zur Stromerzeugung für den Wohnbereich.

Der Begriff "gekoppelt" beschreibt eine funktionale Verbindung zwischen zwei oder mehr Komponenten, die einen Austausch von Energie oder Signalen ermöglicht. In Ausführungsformen bedeutet die Kopplung, dass die Energieversorgungseinheit so mit der Solaranlage verbunden ist, dass sie von dieser geladen oder direkt mit Energie versorgt werden kann.

Eine Vorrichtung zur automatisierten Reinigung ist ein System, das selbstständig oder auf ein Signal hin eine Oberfläche von Verschmutzungen befreit. In Ausführungsformen kann diese Vorrichtung als System aus Sprühdüsen und/oder miniaturisierten Scheibenwischern realisiert sein. In weiteren Ausführungsformen kann die Reinigung automatisch durch Umweltsensoren ausgelöst werden, die eine Verschmutzung der Sensoroberflächen detektieren.

Sensorabdeckungen sind transparente oder für bestimmte Wellenlängen durchlässige Elemente, die den eigentlichen Sensor vor physischen und umweltbedingten Einflüssen schützen. In Ausführungsformen sind dies die äußeren Oberflächen, wie Linsen oder Fenster des Gehäuses, durch die die Kameras, Lidar- und Radarsensoren ihre Messungen durchführen.

Eine Sensorhalterung ist ein mechanisches Bauteil, das einen Sensor fixiert und mit einer größeren Struktur verbindet. In Ausführungsformen kann die Sensorhalterung beweglich sein und dazu dienen, den daran befestigten Sensor in eine Betriebs- oder eine Ruheposition zu bewegen.

"Teleskopierbar oder ausfahrbar" beschreibt eine mechanische Eigenschaft, die es einer Komponente ermöglicht, ihre Position oder Länge zu verändern, typischerweise um sie aus einer geschützten Ruheposition in eine funktionale Arbeitsposition zu bewegen. In Ausführungsformen dient diese Eigenschaft dazu, die Sensoren oder die Halterung im geparkten Zustand einzufahren, um sie vor Beschädigung zu schützen oder die Fahrzeughöhe zu reduzieren.

Ultraschallsensoren sind Sensoren, die Schallwellen im Ultraschallbereich aussenden und deren Echos empfangen, um Abstände zu Objekten zu messen. In Ausführungsformen werden diese Sensoren für die präzise Abstandsmessung im unmittelbaren Nahbereich des Fahrzeugs verwendet, beispielsweise beim Einparken oder bei Manövern mit niedriger Geschwindigkeit.

Eine GNSS-Antenne mit RTK-Fähigkeit ist ein Empfänger für globale Navigationssatellitensysteme, der durch Echtzeit-Kinematik-Korrekturdaten eine hochpräzise Positionsbestimmung ermöglicht. In Ausführungsformen dient diese Antenne der zentimetergenauen absoluten Positionsbestimmung des Fahrzeugs, was eine Grundlage für fortgeschrittene autonome Fahrfunktionen ist.

Eine IMU (Inertial Measurement Unit) ist eine elektronische Einheit, die mittels Inertialsensoren die Beschleunigungen und Drehraten eines Körpers misst. In Ausführungsformen erfasst die IMU die Eigenbewegungen des Fahrzeugs. In weiteren Ausführungsformen werden deren Daten genutzt, um die Positionsbestimmung bei einem Ausfall des GNSS-Signals, beispielsweise in Tunneln, zu stützen.

Umweltsensoren sind Sensoren, die dazu dienen, verschiedene physikalische oder chemische Eigenschaften der Umgebung zu erfassen. In Ausführungsformen dienen diese Sensoren, zur Erkennung von Lichtverhältnissen, Niederschlag oder dem Verschmutzungsgrad der Sensoroberflächen. In weiteren Ausführungsformen können die von diesen Sensoren gelieferten Daten verwendet werden, um die Parameter anderer Sensoren anzupassen oder eine automatische Reinigung auszulösen.

Eine Sensorträgerarchitektur ist ein konzeptioneller Aufbau, der die Art und Weise der Integration eines Sensorträgers in die Gesamtstruktur eines Fahrzeugs beschreibt. In Ausführungsformen ist dies eine strukturintegrierte Architektur, bei der der Sensorträger ein integraler Bestandteil einer primären tragenden Fahrzeugstruktur ist oder unmittelbar an diese angebunden wird.

Ein Sensorträger ist eine mechanische Vorrichtung, die dazu dient, eine oder mehrere Sensoreinheiten aufzunehmen, zu halten und zu positionieren. In Ausführungsformen ist der Sensorträger als dauerhaft strukturstabile Referenzplattform ausgebildet, die unabhängig von austauschbaren Karosserieteilen bestehen bleibt.

Eine Sensoreinheit ist eine modulare Baugruppe, die mindestens einen Sensor und gegebenenfalls zugehörige Elektronik umfasst. In Ausführungsformen kann eine Sensoreinheit einen Lidar-, Radar- oder Kamerasensor oder eine Kombination davon enthalten und ist über definierte mechanische Schnittstellen austauschbar.

Der optische Mittelpunkt ist der definierte Punkt innerhalb eines optischen Sensors (wie einer Kamera oder eines Lidar-Sensors), der als Referenz für dessen Position und die von ihm erzeugten Daten dient. In Ausführungsformen ist dies bei einer Kamera der Hauptpunkt oder das Projektionszentrum des Objektivs und/oder der Punkt, durch den Lichtstrahlen ungebrochen verlaufen. In weiteren Ausführungsformen ist dies bei einem Lidar-Sensor der effektive Ursprungspunkt, von dem die Laserstrahlen ausgehen und auf den die reflektierten Messungen zurückgerechnet werden.

Eine kraft- und/oder formschlüssige Integration ist eine mechanische Verbindung, die durch die Geometrie der Teile (formschlüssig) oder durch aufgebrachte Kräfte wie Reibung (kraftschlüssig) eine Relativbewegung verhindert. In Ausführungsformen wird diese Integration durch Verschweißen, hochfeste Schraubverbindungen oder Strukturkleben mit einer primären tragenden Strukturkomponente realisiert.

Eine primäre tragende Strukturkomponente ist ein Bauteil des Fahrzeugs, das wesentlich zur Gesamtsteifigkeit und zum Lastmanagement beiträgt und Teil der Sicherheitszelle ist. In Ausführungsformen sind dies Komponenten wie eine tragende Dachstruktur, ein struktureller Querträger oder eine Komponente des Fahrzeugbasismoduls, im Gegensatz zu nicht-tragenden Verkleidungsteilen.

Mechanische Referenzelemente sind physische Merkmale an Bauteilen, die dazu dienen, eine exakte und wiederholgenaue Positionierung zueinander zu gewährleisten. In Ausführungsformen sind diese Referenzelemente als Kombination aus Passstiften und Anlageflächen oder als konische Zentrierelemente ausgebildet, die zwischen dem Sensorträger und der tragenden Struktur angeordnet sind.

Dies beschreibt die Fähigkeit, die exakte Position (Lage) und Ausrichtung (Orientierung) eines Objekts unmissverständlich und wiederholbar zu ermitteln. In Ausführungsformen wird dies durch die mechanischen Referenzelemente ermöglicht, sodass die Position des Sensorträgers auch nach einer Demontage und Wiedermontage exakt dieselbe ist, ohne dass eine Neukalibrierung erforderlich ist.

Ein fahrzeugfestes Strukturkoordinatensystem ist ein Referenzsystem, dessen Ursprung und Achsen durch die unveränderlichen, tragenden Teile des Fahrzeugchassis oder der selbsttragenden Karosserie definiert sind. In Ausführungsformen dient dieses Koordinatensystem als absolute und dauerhafte Referenz, auf die alle erfassten Sensordaten zurückgeführt werden können.

Eine dauerhaft strukturstabile Referenzplattform ist ein Bauteil, das so konstruiert ist, dass es seine Form und Position über lange Zeiträume und unter Belastung beibehält. In Ausführungsformen ist dies ein Sensorträger, der so steif ausgelegt ist, dass seine Geometrie durch Vibrationen, Alterung oder Temperaturschwankungen nicht signifikant beeinflusst wird. In weiteren Ausführungsformen ist er aus Materialien wie hochfestem Stahl oder Faserverbundwerkstoffen gefertigt.

Eine geometrische Referenz ist eine definierte Position und Ausrichtung im Raum, die als unveränderlicher Bezugspunkt für Messungen dient. In Ausführungsformen ist dies die feste, unveränderliche Beziehung zwischen dem fahrzeugfesten Strukturkoordinatensystem und dem Koordinatensystem des Sensorträgers.

Austauschbare oder deformierbare Karosseriemodule sind Fahrzeugteile, die nicht zur tragenden Hauptstruktur gehören und oft aus kosmetischen oder aerodynamischen Gründen angebracht sind oder als Knautschzone dienen. In Ausführungsformen umfasst dies insbesondere Stoßfänger, Kotflügel, Kühlergrills und andere äußere Kunststoff- oder Blechverkleidungen.

Messdaten sind quantitative oder qualitative Informationen, die von einem Sensor erfasst werden. In Ausführungsformen sind dies die von den Lidar-, Radar- oder Kamerasensoren erzeugten Rohdaten, wie Punktwolken, Radar-Echos oder Bilddateien.

Der Begriff "zugeordnet" beschreibt das Herstellen einer eindeutigen mathematischen Beziehung oder Verknüpfung zwischen zwei oder mehr Datensätzen oder Koordinatensystemen. In Ausführungsformen bedeutet die Zuordnung, dass die im Koordinatensystem eines Sensors erfassten Messdaten mittels einer bekannten Transformationsmatrix in das fahrzeugfeste Strukturkoordinatensystem umgerechnet werden.

"Über den Lebenszyklus des Fahrzeugs hinweg" bezieht sich auf einen Zeitraum, der die gesamte Nutzungsdauer des Fahrzeugs von seiner Herstellung bis zu seiner Außerbetriebnahme umfasst. In Ausführungsformen bedeutet dies, dass die Reproduzierbarkeit der Datenauswertung auch nach Jahren der Nutzung, nach Reparaturen oder nach dem Austausch von Komponenten gewährleistet ist.

"Reproduzierbar ausgewertet" beschreibt die Fähigkeit, aus denselben Ausgangsdaten bei wiederholter Analyse zum selben Ergebnis zu kommen. In Ausführungsformen bedeutet dies, dass die auf dem fahrzeugfesten Strukturkoordinatensystem basierende Auswertung von Sensordaten zu jedem Zeitpunkt zum gleichen Ergebnis führt, da die geometrische Referenz konstant bleibt.

Definierte mechanische Schnittstellen sind standardisierte physische Verbindungspunkte, die den präzisen und wiederholgenauen Anbau sowie den Austausch von Komponenten ermöglichen. In Ausführungsformen sind dies präzise gefertigte Montageflächen mit Positionierelementen wie Passstiften oder konischen Aufnahmen, die eine wiederholgenaue Positionierung einer Sensoreinheit auf dem Sensorträger sicherstellen. In weiteren Ausführungsformen können diese als kombinierte elektro-mechanische Schnittstellen ausgeführt sein.

Die modulare und austauschbare Aufnahme ist ein Konstruktionsprinzip, bei dem ein System aus einzelnen, austauschbaren Bausteinen (Modulen) zusammengesetzt ist. In Ausführungsformen ermöglicht dies, dass einzelne Sensoreinheiten bei einem Defekt oder für ein Upgrade getauscht werden können, ohne die gesamte Sensorträgerarchitektur verändern oder neu kalibrieren zu müssen.

Eine tragende Dachstruktur ist der Teil des Fahrzeugdachs, der zur Gesamtsteifigkeit der Karosserie beiträgt. In Ausführungsformen umfasst dies die Dachlängs- und Querträger sowie die oberen Bereiche der Fahrzeugsäulen (A-, B-, C-Säulen).

Ein struktureller Querträger ist ein tragendes Bauteil, das quer zur Fahrtrichtung verläuft und zur Versteifung des Fahrzeugchassis dient. In Ausführungsformen kann dies ein Querträger im Bereich der Stirnwand (Firewall), ein Sitzquerträger oder ein Teil eines Leiterrahmens sein.

Eine lasttragende Komponente eines Fahrzeugbasismoduls ist ein fundamentaler Bestandteil des Chassis oder der Rohkarosseriestruktur, der Lasten aufnimmt und verteilt. In Ausführungsformen kann dies ein Längsträger eines Rahmens oder ein Schweller einer selbsttragenden Karosserie sein.

Ein Fahrzeug ist ein Fortbewegungsmittel zur Beförderung von Personen und/oder Gütern. In Ausführungsformen ist dies ein Fahrzeug, das mit der erfindungsgemäßen Sensorträgerarchitektur ausgestattet ist, ein Freizeitfahrzeug, ein Personenkraftwagen (PKW) oder ein Nutzfahrzeug.

### Ausführungsbeispiele

Die folgenden Beispiele sind nicht gedacht, den Umfang der Erfindung zu beschränken, sondern stellen beispielhafte, nicht limitierende Ausführungsformen der Erfindung dar.

### Ausführungsbeispiel 1: Modulare Sensorplattform als Nachrüstlösung für ein Freizeitfahrzeug

Dieses Beispiel beschreibt ein beispielhaftes Produkt, welches als Nachrüstsatz verkauft werden kann.

Beschreibung des Ausführungsbeispiels: Ein erstes Ausführungsbeispiel der Erfindung ist als modulare Sensorplattform zur Nachrüstung auf dem Dach eines bestehenden Wohnmobils realisiert. Die Plattform besteht aus einer einzigen, montierbaren Einheit, die in einem aerodynamisch geformten und witterungsgeschützten Gehäuse aus UV-beständigem Kunststoff untergebracht ist. Das Gehäuse ist ca. 120 cm lang, 80 cm breit und 15 cm hoch und so gestaltet, dass es sich formschlüssig an die leichten Wölbungen typischer Wohnmobildächer anpasst.

Innerhalb des Gehäuses sind die Sensoren beispielsweise wie folgt positioniert: Ein zentral und leicht erhöht angebrachter 360°-Lidar-Sensor sorgt für eine vollständige Rundumsicht. In den vier Ecken des Gehäuses sind Weitwinkel-Kamerasysteme integriert, deren Sichtfelder sich überlappen, um eine lückenlose Abdeckung zu gewährleisten. Zusätzlich sind zwei Radar-Sensoren integriert: ein Fernbereichs-Radar (77 GHz) an der Vorderseite zur Erfassung des vorausfahrenden Verkehrs und ein Nahbereichs-Radar (24 GHz) an der Rückseite zur Überwachung des toten Winkels und des rückwärtigen Bereichs.

Die Energieversorgung erfolgt über eine integrierte Energieversorgungseinheit mit einer Pufferbatterie. Diese Einheit ist über einen Stecker mit der bestehenden Solaranlage auf dem Dach des Wohnmobils gekoppelt, um die Pufferbatterie tagsüber zu laden und die Sensorik autark zu betreiben.

An der Vorderseite des Gehäuses ist eine automatisierte Reinigungseinheit angebracht, die aus zwei Sprühdüsen besteht. Diese werden von der Scheibenwaschanlage des Fahrzeugs mitversorgt und können bei Bedarf die vorderen Abdeckungen der Kameras und des Lidar-Sensors von Schmutz und Insekten befreien.

Die Montage der Einheit erfolgt auf dem Dach des Freizeitfahrzeugs mittels Strukturklebstoff und vier zusätzlichen mechanischen Sicherungen an den Ecken. Die Datenverbindung zur zentralen Verarbeitungseinheit im Fahrzeug wird über ein einzelnes, abgedichtetes Kabel realisiert, das durch eine bestehende Dachdurchführung geführt wird.

### Ausführungsbeispiel 2: Strukturintegrierte Sensorträgerarchitektur in einem Personenkraftwagen (PKW)

Dieses Beispiel beschreibt eine Ausführungsform, die insbesondere für die Neuproduktion von Fahrzeugen geeignet ist.

Beschreibung des Ausführungsbeispiels: Ein zweites Ausführungsbeispiel betrifft die Realisierung einer Sensorträgerarchitektur in einem modernen Personenkraftwagen mit selbsttragender Monocoque-Karosserie. Im Gegensatz zum ersten Ausführungsbeispiel, das eine aufgesetzte Einheit beschreibt, wird hier der Sensorträger selbst zu einem integralen Bestandteil der Fahrzeugstruktur.

Der Sensorträger ist als hochfester Aluminium-Druckguss-Querträger ausgeführt. Dieser Querträger wird im Fertigungsprozess des Fahrzeugs im vorderen Bereich der Dachstruktur, zwischen den A- und B-Säulen, als festes Bauteil in die Dachhaut eingeschweißt. Er wird somit zu einer primären tragenden Strukturkomponente.

An der Oberseite dieses Querträgers sind präzise gefertigte Montageflächen mit zwei Passstiften und einer Anlagefläche als definierte mechanische Referenzelemente vorgesehen. Diese Elemente definieren ein lokales Koordinatensystem, dessen Position und Orientierung relativ zum fahrzeugfesten Strukturkoordinatensystem exakt bekannt ist und im Steuergerät des Fahrzeugs hinterlegt wird.

Auf diese Referenzplattform wird eine separate, austauschbare Sensoreinheit aufgesetzt. Diese Einheit enthält die Sensorik (beispielsweise eine Kombination aus Solid-State-Lidar und Stereokameras). Die Sensoreinheit wird mit hochfesten Schrauben fixiert, wobei die Passstifte eine wiederholgenaue Positionierung im Sub-Millimeterbereich gewährleisten.

Während der End-of-Line-Kalibrierung im Werk wird die exakte Position und Orientierung der montierten Sensoreinheit relativ zum fahrzeugfesten Strukturkoordinatensystem einmalig vermessen und diese Transformationsmatrix als manipulationssicherer Datensatz im Fahrzeug gespeichert.

Bei einem späteren Austausch einer defekten Sensoreinheit muss lediglich die neue Einheit aufgesetzt und verschraubt werden. Die grundlegende Referenz des Trägers zum Fahrzeug bleibt unverändert. Eine aufwändige Neukalibrierung des Gesamtsystems ist nicht notwendig, was die Wartung erheblich vereinfacht und die dauerhafte Integrität der Sensordaten für Anwendungen wie eine nachvollziehbare Ereignisdokumentation sicherstellt.

## Patentansprüche

1. Eine Sensorplattform zur Integration auf dem Dach eines Fahrzeugs zur Unterstützung des teil- oder vollautonomen Fahrens, umfassend:
a) mindestens einen Lidar-Sensor,
b) mindestens zwei optische Kameras,
c) mindestens einen Radar-Sensor, und
d) eine Datenverbindungseinheit zur Verbindung mit einer Verarbeitungseinheit im Fahrzeug,
wobei die Sensoren in mindestens einer auf dem Dach des Fahrzeugs montierbaren Einheit angeordnet sind.

2. Die Sensorplattform nach Anspruch 1, **dadurch gekennzeichnet, dass** die Sensoren in einem aerodynamisch geformten und witterungsgeschützten Gehäuse untergebracht sind.

3. Die Sensorplattform nach einem der vorhergehenden Ansprüche, **dadurch gekennzeichnet, dass** sie ferner eine Energieversorgungseinheit umfasst, die zur unabhängigen Energieversorgung oder Pufferung ausgebildet ist.

4. Die Sensorplattform nach Anspruch 3, **dadurch gekennzeichnet, dass** die Energieversorgungseinheit mit einer Solaranlage des Fahrzeugs gekoppelt ist.

5. Die Sensorplattform nach einem der vorhergehenden Ansprüche, **dadurch gekennzeichnet, dass** sie zusätzlich eine Vorrichtung zur automatisierten Reinigung von Sensorabdeckungen umfasst.

6. Die Sensorplattform nach einem der vorhergehenden Ansprüche, **dadurch gekennzeichnet, dass** mindestens einer der Sensoren oder eine Sensorhalterung teleskopierbar oder ausfahrbar gestaltet ist.

7. Die Sensorplattform nach einem der vorhergehenden Ansprüche, ferner umfassend mindestens einen Sensor aus der Gruppe bestehend aus: Ultraschallsensoren, GNSS-Antennen mit RTK-Fähigkeit, IMU (Inertial Measurement Unit) und Umweltsensoren.

8. Eine Sensorträgerarchitektur für ein Fahrzeug, umfassend einen Sensorträger zur Aufnahme von mindestens einer Sensoreinheit, **dadurch gekennzeichnet, dass**
der Sensorträger für eine kraft- und/oder formschlüssige Integration in eine primäre tragende Strukturkomponente des Fahrzeugs ausgebildet ist, und
mechanische Referenzelemente zwischen dem Sensorträger und der tragenden Strukturkomponente vorgesehen sind, sodass eine eindeutige und reproduzierbare Lage- und Orientierungsbestimmung des Sensorträgers relativ zu einem fahrzeugfesten Strukturkoordinatensystem ermöglicht wird.

9. Die Sensorträgerarchitektur nach Anspruch 8, **dadurch gekennzeichnet, dass** der Sensorträger als dauerhaft strukturstabile Referenzplattform ausgebildet ist, die ihre geometrische Referenz zum fahrzeugfesten Strukturkoordinatensystem unabhängig von austauschbaren oder deformierbaren Karosseriemodulen beibehält.

10. Die Sensorträgerarchitektur nach einem der Ansprüche 8 bis 9, **dadurch gekennzeichnet, dass** die Referenzelemente so ausgebildet sind, dass von den Sensoreinheiten erfasste Messdaten eindeutig dem fahrzeugfesten Strukturkoordinatensystem zugeordnet und über den Lebenszyklus des Fahrzeugs hinweg reproduzierbar ausgewertet werden können.

11. Die Sensorträgerarchitektur nach einem der Ansprüche 8 bis 10, **dadurch gekennzeichnet, dass** der Sensorträger definierte mechanische Schnittstellen zur modularen und austauschbaren Aufnahme der Sensoreinheiten aufweist, ohne die Referenzgeometrie zur tragenden Strukturkomponente zu verändern.

12. Die Sensorträgerarchitektur nach einem der Ansprüche 8 bis 11, **dadurch gekennzeichnet, dass** die primäre tragende Strukturkomponente eine tragende Dachstruktur, ein struktureller Querträger oder eine lasttragende Komponente eines Fahrzeugbasismoduls ist.

13. Die Sensorträgerarchitektur nach einem der Ansprüche 8 bis 12, **dadurch gekennzeichnet, dass** das Fahrzeug ein Freizeitfahrzeug ist und die primäre tragende Strukturkomponente Teil der Dachstruktur des Freizeitfahrzeugs ist.

14. Die Sensorträgerarchitektur nach einem der Ansprüche 8 bis 13, **dadurch gekennzeichnet, dass** die mindestens eine Sensoreinheit eine Kombination aus mindestens einem Lidar-Sensor, mindestens einem Radar-Sensor und mindestens einer optischen Kamera umfasst.

15. Ein Fahrzeug, umfassend eine Sensorträgerarchitektur nach einem der Ansprüche 8 bis 14.
